(19) **Europäisches Patentamt**

**European Patent Office**

**Office européen des brevets**

(11) **EP 1 677 531 A1**

(12) **EUROPEAN PATENT APPLICATION**
published in accordance with Art. 158(3) EPC

(43) Date of publication:
**05.07.2006 Bulletin 2006/27**

(51) Int Cl.:
***H04N 5/91*** (1980.01)

(21) Application number: **04746958.0**

(22) Date of filing: **29.06.2004**

(86) International application number:
**PCT/JP2004/009489**

(87) International publication number:
**WO 2005/039175 (28.04.2005 Gazette 2005/17)**

(84) Designated Contracting States:
**DE FR GB**

(30) Priority: **16.10.2003 JP 2003356079**

(71) Applicant: **MATSUSHITA ELECTRIC INDUSTRIAL CO., LTD.**
**Kadoma-shi, Osaka 571-8501 (JP)**

(72) Inventors:
• **HAYASHI, Daisuke**
 **Osaka 571-8501 (JP)**

• **MITA, Hideaki**
 **Osaka 571-8501 (JP)**
• **YAMASHITA, Toru**
 **Osaka 571-8501 (JP)**

(74) Representative: **Eisenführ, Speiser & Partner**
**Patentanwälte Rechtsanwälte**
**Postfach 10 60 78**
**28060 Bremen (DE)**

(54) **VIDEO/AUDIO RECORDER/REPRODUCER, VIDEO/AUDIO RECORDING METHOD AND REPRODUCING METHOD**

(57) A recording and reproducing apparatus for audio and video has an AV input section (100) that receives audio and video main information, an audio additional information input section (110) that receives audio additional information (voice memo) added to the main information, a recording and reproducing section (140) that records and reproduces audio and video data, a recording medium (150) that records audio and video data, and a controller (120) that controls operations of the sections. The controller (120) controls the operations to record audio additional information to the recording medium (150) in relation to a specific frame position in the main information. The specific frame position is specified by time code or offset (number of frames from the beginning of main information) or the like.

*Fig.1*

**Description**

Technical Field

The present invention relates to recording and reproducing apparatus and method of audio and video data such as memory recordable camera-recorder, and more particularly to apparatus and method of recording and reproducing main information of audio and video data by relating to audio added information.

Background Art

Hitherto, when producing a program by using a tape recorded by a camcorder, generally, a program is produced by editing only necessary scenes out of multiple recorded cuts (scenes).
A conventional nonlinear editing machine used in such editing operation is designed to incorporate audio and video information recorded as materials in a tape into a random accessible recording medium such as hard disk, and edit while randomly accessing the audio and video incorporated in the hard disk.
For editing efficiently, the editor must recognize the content of each cut. So far, a still image of character title or the like explaining the content of the cut was inserted at the beginning of each cut by taking as so-called credit (additional information for assisting editing), and recorded in the hard disk. When editing, by reproducing the recorded credit of the still image and displaying on the monitor, the content in each cut can be easily recognized.

Disclosure of the Invention

(Problems to be Solved by the Invention)

It is time-consuming work to take and insert credit of character title or the like, explaining the content at the beginning of each cut, and a simple method for recognizing the content of each cut has been demanded.
To meet the demand, Japanese Patent Unexamined Publication No. 2001-136482 has proposed a method recording and reproducing audio additional information (voice memo) by relating to the main information, aside from the main information of audio and video, as means for recognizing contents of each cut.
In this patent publication, however, only the concept of relating the additional information (voice memo) to the material of each cut is disclosed, but nothing specific is mentioned about the method of application to memory recording camera-recorder or the like. Another problem is that the voice memo can be recorded only during reproduction of the main information.

(Solving Methods)

The invention is devised to solve the above problems, and it is hence an object thereof to present a specific method of adding additional information to each cut in recording and reproducing apparatus for audio and video.
In a first aspect of the invention, a recording and reproducing apparatus for audio and video is provided. The recording and reproducing apparatus includes an AV input section that receives main information for audio and video, an audio additional information input section that receives audio additional information which is added to the main information, an AV output section that outputs the main information and audio additional information, a recording medium that stores the main information and audio additional information, a recording and reproducing section that records the main information and audio additional information to the recording medium or reproduces the main information and audio additional information from the recording medium, and a controller that controls the operation of the AV input section, audio additional information input section, AV output section, and recording and reproducing section. The controller controls the sections so that the audio additional information is recorded to the recording medium, in which the audio additional information is related to a specific frame position in the main information.
In second first aspect of the invention, an audio and video recording method is provided. The reproducing method includes receiving audio and video main information, receiving audio additional information added to the main information, and recording the audio additional information to a recording medium so that the audio additional information is related to a specific frame position in the main information.
In third first aspect of the invention, provided is a reproducing method of reproduction from a recording medium to which main information and audio additional information are recorded in the audio and video recording method mentioned above. The reproducing method includes displaying a thumbnail image of main information, one or more pieces of audio additional information being related to the same main information, and when one of the one or more pieces of audio additional information is selected, displaying a thumbnail image of main information at a frame position related to the selected audio additional information.

In third first aspect of the invention, provided is a reproducing method of reproduction from a recording medium to which main information and audio additional information are recorded by the audio and video recording method mentioned above. The reproducing method reproduces the audio additional information out of synchronization with the time axis of the main information.

(Effects of the Invention)

According to the invention, audio additional information (voice memo) for explaining the content of audio and video main information can be recorded in relation to a specific frame position of main information, and a plurality of voice memo can be recorded at one point on the time axis in main information.

A specific frame position in main information can be also designated by the number of frames from the beginning of main information, and therefore if the time codes of material data are not consecutive, audio additional data can be related to a desired position of material data.

Further, audio additional information may be related to every material data (clip) recorded consecutively, so that the audio additional information can be used as memo of each scene.

Audio additional data relating to entire recording medium may be recorded, and audio additional data may be related to show what shots are recorded in the recording medium, so that it may be easier to distinguish from other recording media.

As for main information (shots) recorded in a plurality of recording media, the relating of audio additional data may be done in each recording medium. Thus, even if one/some of the recording media is/are removed, audio additional information relating to main information recorded in the remaining recording media can be recorded and reproduced.

When recording of main information is over, recording of audio additional information may be terminated, thus saving the labor of the user for finishing the recording operation of audio additional information at the end of recording of material data.

Audio additional information may be recorded at sampling rate or bit rate different from audio data of main information. Thus, for example, recording audio additional information at lower rate can provide extended recordable time of audio additional data.

Further, audio additional information may be recorded in a file format different from audio data of main information. Thus, for example, recordingmain information in a format exclusive for editing machine and audio additional information in a format for general PC can also achieve reproduction of audio additional data on a PC.

A recording medium may be preliminarily provided with a region for recording audio additional information, so that recording of audio additional data can be assured if vacant capacity of main information is not available.

It may be designed to allow recording of audio additional information in any state, such as during recording of main information, during pause of recording, during stop of recording, during reproduction, during pause of reproduction, or during stop of reproduction, so that the editing job will be very easy.

On deleting the main information related to audio additional information, the audio additional information relating to the deleted main information may be deleted at the same time, and failing of erasure of unnecessary audio additional data can be prevented.

When one or more pieces of audio additional information are related to same main information, if one of the one or more pieces of audio additional information is selected, the thumbnail image of main information at the frame position relating to the selected audio additional information may be displayed, so that it is easier to search necessary audio additional information.

On reproducing audio additional information, thumbnail of main information or video information in main information relating to the audio additional information may be displayed, so that the main information can be recognized while reproducing audio additional information.

When one piece of audio additional information is selected, main information may be reproduced from a frame position of main information related to the selected audio additional information, and after searching with audio additional information as key, related main information can be recognized immediately, and the editing job efficiency is enhanced.

During reproduction of audio additional information, main information may be reproduced from a frame position of main information related to the audio additional information being reproduced. After searching with audio additional information as key, the relatedmain information can be recognized immediately, and the editing job efficiency is enhanced.

Management information about audio additional information, which includes information showing a state upon start of recording of audio additional information, maybe also provided, and by referring to this management information, audio additional information can be reproduced in various methods.

Further, audio additional information may be recorded in relation to main information out of synchronization with time axis of main information, so that it is easier to control reproduction of audio additional information.

Brief Description of the Drawings

Fig. 1 is a block diagram of a recording and reproducing apparatus for audio and video in an embodiment 1 of the invention.

Fig. 2 is an explanatory diagram of relation of voice memo with specific position in clip.

Fig. 3 is a diagram of example of management information (voice memo management table) showing relation of voice memo file and clip.

Fig. 4 is a diagram of example of management information (clip management table) showing relation of clip and material file (video and audio file) for composing the clip.

Fig. 5 is a flowchart of processing for reproduction of data (clip) of the main content data related to voice memo data during voice memo reproduction.

Fig. 6 is a flowchart of processing for reproduction of voice memo related to clip during clip reproduction.

Fig. 7 is a block diagramof a recording and reproducing apparatus for audio and video having a plurality of recording media in an embodiment 2 of the invention.

Fig. 8 is an explanatory diagram of relation of voice memo with specific position in shots recorded in a plurality of recording media.

Fig. 9 is a diagram of example of operation unit in recording and reproducing apparatus.

Fig. 10 is a flowchart of recording operation of voice memo.

Fig. 11 is a diagram of display example of clip list screen.

Fig. 12 is a diagram of display example of voice memo clip list screen.

Fig. 13 is a flowchart of reproduction operation of voice memo.

Fig. 14 is a diagram of display example of screen during voice memo reproduction.

Fig. 15 is a block diagram of directory structure of contents in recording medium.

Fig. 16 is an explanatory diagram of tag for managing clip information.

Fig. 17 is a diagram of example of XML description of clip file.

Best Mode for Carrying out the Invention

Referring now to the accompanying drawings, preferred embodiments of recording and reproducing apparatus for audio and video of the invention are specifically described below.

Embodiment 1

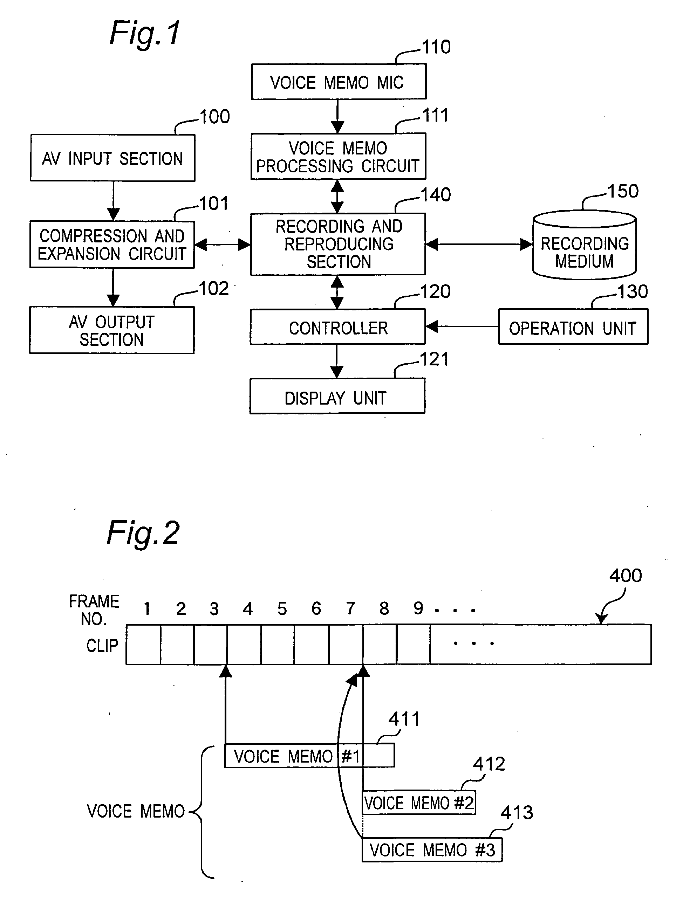

Fig. 1 is a block diagram of schematic configuration of memory recordable camera-recorder of the invention.

An audio and video (AV) input section 100 receives audio information and video information as main information. Video information can be received by way of imaging device or reproducing device, audio information can be received by way of microphone or reproducing device. However, receiving means may be arbitrary as far as audio and video information can be received. Herein, "main information" means audio and video information to which audio additional information may be added, and it is also called "main content data."

A compression and expansion circuit 101 compresses data of audio and video main information received through the AV input section 100, and outputs as main data of audio and video data to a recording and reproducing section 140, or expands audio and video main data and audio additional data reproduced from the recording and reproducing section 140, and outputs as audio and video main information and audio additional information to an audio and video (AV) output section 102.

The AV output section 102 outputs the audio and video main information and audio additional information from the compression and expansion circuit 101 to outside.

A voice memo microphone 110 is means for inputting audio additional information, and receives voice memo as audio additional information. As an means for inputting audio additional information, instead of installing a microphone in the camera-recorder, audio input terminal may be provided, and input means such as a microphone may be connected thereto. A voice memo processing circuit 111 converts or compresses the data of audio additional information entering through the voice memo microphone 110, and outputs to the recording and reproducing section 140 as audio additional data.

A controller 120 controls the operation of parts such as the recording and reproducing section 140 and a display unit 121. The display unit 121 displays the voice memo number and thumbnails (representative image) or the like specified by the controller 120. An operation unit 130 includes a record button, a play button, a voice memo play button, and others, and receives user's commands from outside. The recording and reproducing section 140 records the audio and video main data from the compression and expansion circuit 101, and audio additional data from the voice memo processing circuit 111, into a recording medium 150, and outputs the audio and video main data and audio additional data reproduced from the recording medium 150 into the compression and expansion circuit 101.

The recording medium 150 is a random accessible recording medium for recording audio and video main data and audio additional data from the recording and reproducing section 140. The recording medium 150 is not specified in type as far as it is a random accessible recording medium, including built-in type, external type, detachable type, and others, or a plurality may be present. For example, it may be considered that the recording medium 150 is hard disk, optical disk, magneto-optical disk, or semiconductor memory. In this embodiment, only one recording medium is assumed.

When main data of audio and video for composing material data is recorded consecutively in one recording medium 150, the unit of recorded series data is called a "clip" (it is explained later that one material data is recorded in a plurality of recording media).

When video main data and audio main data are recorded in the recording medium 150 as same file, the clip is composed of one material file, but when video main data and audio main data are recorded in the recording medium 150 as different files, the clip may be composed of a plurality of material files. In this embodiment, video main data and audio main data are recorded in the recording medium 150 as different files, and in one clip, it is supposed that video main data is composed of one video file and audio main data is composed of audio file of a plurality of channels. Hereinafter, the video main data is merely called "video data", and audio main data is merely called "audio data".

Audio information entering from the voice memo microphone 110 is converted into audio additional data by voice memo processing circuit 111 to be output. This audio additional data is called "voice memo data".

When the recording and reproducing section 14 0 records data in the recording medium 150, this voice memo data is recorded in relation to the time code in the clip. The time code to be related may be time code about first frame in the clip or time code about any arbitrary intermediate frame.

By recording the voice memo data in relation to time code in clip, a plurality of pieces of voice memo can be recorded in one clip. It is also possible to relate to a specific position in frame unit of material data. On editing, by listening to the voice memo, position of desired material data can be found out easily.

Instead of time code of clip, the voice memo data can be related to frame offset (number of frames from the beginning) of clip.

Referring to Fig. 2, relating of voice memo data to frame offset of clip is specifically described below.

Relating to one frame (frame offset = 4) in a clip 400, voice memo #1 (411) is recorded. Voice memo #2 (412) is related and recorded in frame (frame offset = 8) behind the frame to which voice memo #1 (411) is related. Time of related frame offset position of voice memo #2 (412) may be earlier than the end time of voice memo #1 (411). Other voice memo #3 (413) may be recorded so that it is related to exactly the same frame as a frame (frame offset = 8) to which voice memo #2 (412) is related.

Thus, the recording time of voice memo is not directly related to the recording time of material clip for composing the main content data. That is, the voice memo can be considered to be recorded at one point on the frame offset of related clip. Hence, it is possible to record voice memo for a longer time than in material clip. However, the upper limit of recording time of voice memo is specified within a predetermined time as described below.

The voice memo data may be related to a specific frame offset value of clip, for example, beginning frame of clip. At this time, the voice memo may be defined to be related to the entire clip. By thus relating to the entire clip, it is easy to search in the clip unit, using voice memo as key.

Also by relating the voice memo data to the frame offset of clip and recording, if the time codes in the clip are not consecutive, a desired relation is obtained.

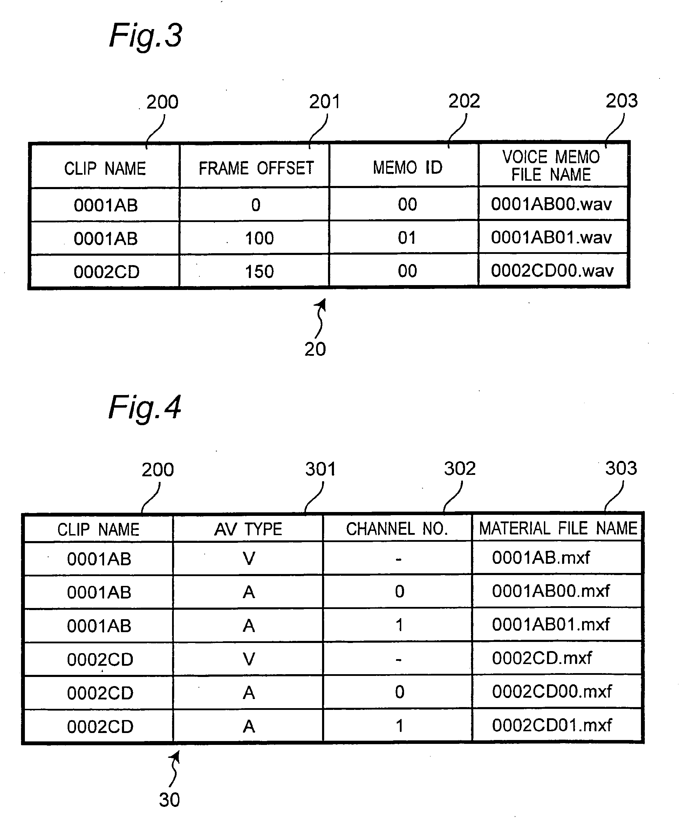

As the method of relating the frame offset of clip to the voice memo data, for example, it may be considered to use a management table (hereinafter referred to as "voice memo management table") showing the relation of clip and voice memo file as shown in Fig. 3, or a management table (hereinafter referred to as "clip management table") showing relation of clip and its material file (video and audio data file) as shown in Fig. 4. Fig. 3 and Fig. 4 show management tables relating the voice memo data and frame offset of clip.

In the voice memo management table 20 shown in Fig. 3, a clip name 200 shows a clip ID. Within a same recording medium, all clips have unique IDs. A frame offset 201 is the number of frames from the beginning of clip. A memo ID 202 is a unique ID added to a plurality of voice memos related to a same clip. A voice memo file name 203 is a file name of voice memo file, and all voice memo file names in the same clip have unique file names.

In the clip management table 30 shown in Fig. 4, an AV type 301 is the information showing whether the type of clip (material file) composing the main content data is video data or audio data. A channel number 302 specifies channel number for audio data, but it does not need to specify channel number for video data. A material file name 303 is a unique file name of video data or audio data as material file for composing the clip.

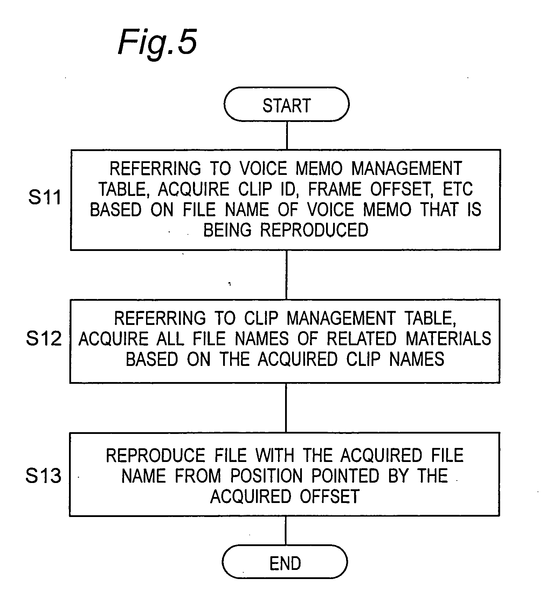

With reference to a flowchart in Fig. 5, the process of reproduction of main data (clip) related to voice memo data during reproduction of the voice memo is explained. The clip and voice memo are related to each other by way of management information shown in Fig. 2 and Fig. 3.

Voice memo file name of voice memo being reproduced is unique within one clip. Hence, referring to the voice memo management table 20, related clip name and frame offset are determined by using voice memo file name as key (S11). Next, referring to a clip management table 30, file names (a material file names 303) of all material files composing a clip with the determined clip name are acquired (S12) . That is, material file names are acquired as many as the number of files for composing the clip. In each one of data files having the obtained material file names, reproduction is started from the position indicated by the frame offset obtained previously (S13) . Thus, by referring to management information 20, 30, correspondence between voice memo and main content data (clip) can be recognized, and during reproduction of the voice memo, the clip relating to the voice memo can be reproduced.

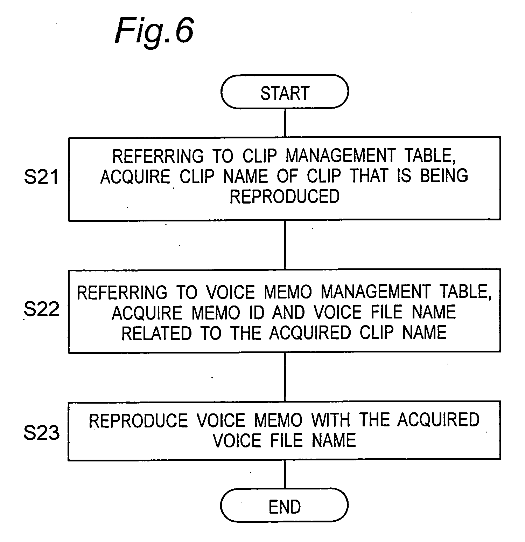

With reference to a flowchart in Fig. 6, the process of reproduction of voice memo related to clip during reproduction of the clip is explained.

Referring to the clip management table 30, clip name of the clip being reproduced at the present is acquired (S21). Referring to the voice memo management table 20, memo ID related to the acquired clip name, and voice memo file name corresponding to this memo ID are acquired (S22). Voice memo data indicated by the acquired voice memo file name is reproduced (S23). A specific method of specifying the voice memo to be reproduced is described later.

In this method, using the management information 20, 30, the clip and voice memo data can be related to each other. Since the voice memo is related to the time code and frame offset in the clip, a plurality of voice memo data can be related to one clip. Also a plurality of voice memo can be related to the same frame offset in a specific clip.

In this embodiment, the audio and video information is compressed or audio and video data is expanded by the compression and expansion circuit 101, but without compressing and expanding, non-compressed data of audio and video information can be handled directly.

In the embodiment, as means for relating the frame offset in the clip to voice memo data, management tables shown in Fig. 3 and Fig. 4 are used, but other means may be used as far as their relation is realized.

In the embodiment, the voice memo is related to the frame offset or time code in the clip, but as far as the voice memo can be related to a position on a specific time axis in the clip, that is, frame position in clip can be specified, the voice memo can be related to any place, not limited to frame offset or time code of clip.

The difference between the voice memo of the invention and the audio information recorded by the after-recording function of a conventional editing machine is explained below.

In the conventional editing machine, after preliminarily recording the audio and video data, audio data may be additionally recorded by postrecording, and may be reproduced as the audio data accompanying the original video data. In this case, the audio data additionally recorded by postrecording is recorded in the condition that it is reproduced in synchronization with the original video data. Therefore, when additionally recording the audio data by after-recording, generally, the audio data is recorded additionally in synchronization during reproduction of the video data.

By contrast, the voice memo of the invention is memo information showing the content of the clip (material data), and is not required to be synchronized with the audio and video main data. Hence, the state of main data is not limited during recording of voice memo, and the voice memo can be recorded regardless of the state of the main data, whether during stop, or during reproduction or trick play (fast search play, reverse, etc.).

In other words, the voice memo is related to a specific point on the time axis of main data, and can be recorded out of synchronization with main data.

When additionally recording audio data by after-recording, the number of additions is limited by the number of audio output channels of the device. For example, in the device of audio output of 4 channels, the audio can be recorded in up to 4 channels. By contrast, the voice memo of the invention can be recorded regardless of the number of audio output channels, by relating a plurality of voice memos to position on same time axis of main data.

Embodiment 2

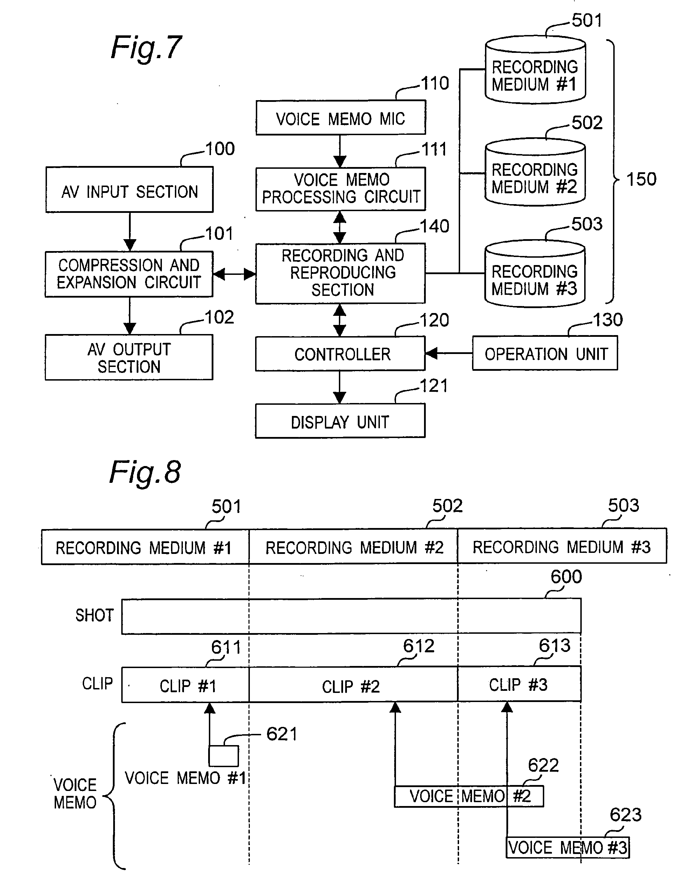

In the embodiment 1, the memory recordable camera-recorder has only one recording medium 150, but the recording medium 150 of this embodiment includes a plurality of detachable recording media (a recording medium #1 (501), a recording medium #2 (502), and a recording medium #3 (503)) as shown in Fig. 7.

In this embodiment, when audio and video main data is consecutively recorded in a plurality of recording media, the recorded data unit is called a "shot" . For example, when a material of one shot is recorded in one recording medium, this shot is one clip. On the other hand, when a material of one shot is recorded in a plurality of recording media, a clip is created for each recording medium. In this case, the voice memo data is related to each divided clip.

Referring to Fig. 8, addition of voice memo to one shot 600 recorded in a plurality of recording media is specifically explained below.

Suppose the shot 600 starts recording from the recording medium #1 (501), continues on the recording medium #2 (502), and finishes recording at the recording medium #3 (503). At this time, a shot 600 is divided and recorded in a clip #1 (611) in a recording medium #1 (501), a clip #2 (612) in the recording medium #2 (502), and a clip #3 (613) in the recording medium #3 (503).

In the embodiment, when recording voice memo data in relation to a specific position in the shot 600, the voice memo data is recorded in the same recording medium as the recording medium storing the intended entity data. For example, if the position desired to relate to the voice memo is data in the clip #1. (611), this voice memo data (a voice memo #1 (621)) is recorded on the recording medium #1 (501). Similarly, if the position desired to relate to the voice memo is data in the clip #2 (612), this voice memo data is recorded on the recording medium #2 (502) (a voice memo #2 (622)). At this time, the finishing time of the voice memo #2 (622) may be behind the finishing time of the clip #2 (612). In this case, however, the voice memo #2 (622) does not continue from the recording medium #2 (502) to the recording medium #3 (503), and is recorded on the same recording medium as the recording medium (that is, in this case, the recording medium #2 (502)) storing the main content data of related position. Likewise, if the position desired to relate the voice memo is data in the clip #3 (613), this voice memo data (a voice memo #3 (623)) is recorded on the recording medium #3 (503). At this time, the finishing time of the voice memo #3 (623) may be behind the finishing time of the shot 600.

In this manner, voice memo data is recorded on recording medium storing the main content data of frame offset of clip to be related. The recording time of voice memo data must be within the upper limit of recording time of voice memo, same as in the embodiment 1.

By relating the voice memo data to data in the clip in this method, in each recording medium, the main content data and voice memo can be reproduced in related state. For example, if the recording medium #3 (503) has been removed, the voice memo #1 (621) related to data in the clip #1 (611) and the voice memo #2 (622) related to data in the clip #2 (612) can be reproduced.

In the embodiment 1, voice memo data is related to a clip including video or audio data, but by making a clip composed of invalid audio and video data (hereinafter referred to as "dummy clip"), voice memo data may be related to this dummy clip. The voice memo data related to dummy clip may be considered to be related to the entire recording medium.

For example, in an entire recording medium storing certain audio and video data, by relating voice memo data showing what data is recorded in this recording medium, it is easy to distinguish this recording medium from other recording media.

Dummy clip, in principle, does not require audio and video data, but when blue back image data is used as invalid video data of dummy clip, it is possible to manage same as existing clips. To judge whether the clip is dummy clip or not, for example, a flag showing dummy clip may be added to the management table in Fig. 3. When making a dummy clip, this flag is set up.


Embodiment 3


In this embodiment, recording process of voice memo is briefly described.

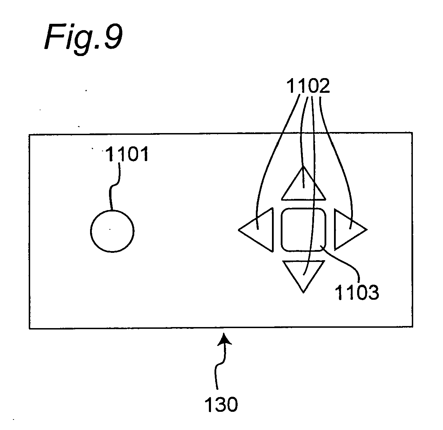

Fig. 9 shows an example of operation unit 130 operated by the user for recording and reproducing the voice memo. The operation unit 130 includes a voice memo record button 1101, a select button 1102, and a decision button 1103.

The voice memo record button 1101 is used for starting recording of voice memo and finishing the recording of voice memo. When the voice memo record button 1101 is pressed while voice memo is not recorded, recording operation of voice memo starts. When the voice memo record button 1101 is pressed while voice memo is recorded, recording operation of voice memo finishes. The voice memo record button 1101 may be divided into record start button and record finish button.

The select button 1102 is, for example, a button for moving the cursor on a list of thumbnails (representative images) of clip, and a button for moving the cursor on various option items.

The decision button 1103 is a button for fixing the selection. For example, when a certain voice memo is selected, by pushing the decision button 1103, reproduction of this voice memo is started. The operation unit 130 may also include other buttons not shown in the drawing.

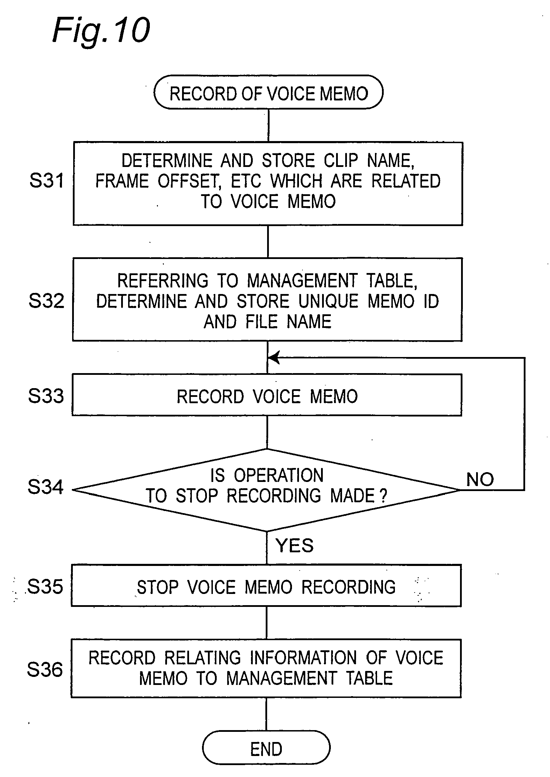

Referring now to Fig. 10, flow of process from recording of voice memo till relating to clip is explained.

When the user presses the voice memo record button 1101 while voice memo is not recorded, recording operation of voice memo starts. At this time, clip name and frame offset of the clip for relating the voice memo to be recorded are acquired, and their information is stored (S31). A specific method of determining the clip and frame offset for relating the voice memo is described later (see the embodiment 5). At this time, referring to management tables 20, 30, memo ID and file name are determined so as not to duplicate within a same clip, and stored (S32). A file name determining method is described later (see the embodiment 7). Then, recording of voice memo starts (S33).

Later, during voice memo recording operation, it is judged whether stop of the recording operation is desired or not by detecting if the user has pressed the voice memo record button 1101 (S34). When the stop of recording operation is desired, recording of voice memo is finished (S35). At this time, the relating information of clip name of voice memo relating destination, frame offset, memo ID, file name, and others stored at the time of start of voice memo recording is recorded in the management table as shown in Fig. 3 (S36).

Embodiment 4

This embodiment describes a specific recording method of voice memo.

Voice memo is memo information showing what is material data, and it is hardly edited after recording. Different from the audio data of material, high sound quality is not required in voice memo. Therefore, voice memo is recorded at lower sampling rate and lower bit rate as compared with audio data of material. Hence, file size of voice memo is smaller, and it is efficient.

For example, audio data of material is recorded at sampling rate of 48 kHz, and voice memo at sampling rate of 8 kHz. Audio data of material is recorded at bit rate of 16 bps (bits per sample), and voice memo at 8 bps. Hence, voice memo can be recorded in 1/12 size of audio data of material, and more audio and video data of material can be recorded in a recording medium of limited capacity.

File format of voice memo may be different from file format of audio data of material.

For example, Material Exchange Format (MXF) is used as format of audio data of main content data, and WAVE for general PC is used as format of voice memo.

Audio data of main content data is supposed to be edited, and it is easy to edit by editing machine by using material exchange format or the like, and the editing efficiency is enhanced. By using WAVE or other format for general PC in voice memo, by using thumbnails (representative images) described later or the like, insertion of title or other simple editing work on PC is possible without actually reviewing the material data.

Recording of material data and voice memo in recording medium is specifically described below. Assuming the sound quality of voice memo to be set somewhat higher, data parameters are set as follows:

- Frame rate: 30 fps (frames per second)
- Frame size of video data of main content data: 120 kB
- Sampling rate of audio data of main content data: 48 kHz
- Sampling rate of voice memo: 12 kHz
- Bit rate of audio data of main content data: 16 bps, and
- Bit rate of voice memo: 16 bps

Herein, the clip is supposed to be composed of one channel of video data and two channels of audio data. At this time, data size per second of clip is

$$(120 \text{ kB} \times 30 \text{ fps}) + ((48 \text{ kHz}) \times 16 \text{ bps}/8 \text{ bit}) \times 2 \text{ ch}$$
$$= 3.792 \qquad \text{MB}$$

$$(1).$$

Data size per second of voice memo is

$$12 \text{ kHz} \times 16 \text{ bps}/8 \text{bit} = 24 \text{ kB} \qquad (2).$$

For the simplicity of explanation, herein, no consideration is given to recording of portions (header, footer, etc.) other than data positions of material data file and voice memo file.

In recording medium, preliminarily, a region exclusive for recording of voice memo may be reserved.

For example, a region for recording voice memo for five minutes (300 seconds) is reserved in the recording medium. Recording capacity necessary for recording voice memo for 5 minutes (300 seconds) is, from formula 2, as follows:

$$24 \text{ kB} \times 300 \text{ seconds} = 7.2 \text{ MB} \qquad (3).$$

That is, the recording capacity (7.2 MB) necessary for recording voice memo for 5 minutes (300 seconds) corresponds to recording capacity for recording a clip for about 1.9 seconds (about 57 frames).

Herein, when recording only the clip in the recording medium with recording capacity of 1 GB, that is, if voice memo recording region is not reserved, the recordable time is calculated from formula (1) as follows:

$$1 \text{ GB}/ \ 3.792 \text{ MB} = \text{about } 264 \text{ seconds} \qquad (4).$$

In the recording medium with recording capacity of 1 GB, when a voice memo recording region for 5 minutes (300 seconds) is reserved preliminarily, the clip recordable time is about 262 seconds. That is, if the voice memo recording region for 5 minutes (300 seconds) is reserved, the recordable time is hardly changed.

Therefore, if voice memo recording region is reserved preliminarily in recording medium, material data recordable time is hardly changed. If voice memo is not recorded in the reserved recording region, the efficiency of use of recording medium is hardly lowered.

As shown in Fig. 8, when the clip #2 (612) and the voice memo #2 (622) are recorded on the recording medium #2 (502), if free region for main content data on the recording medium #2 (502) is no longer available, and the remaining main content data is recorded consecutively on the recording medium #3 (503) as the clip #3 (613), as far as the recording region exclusive for voice memo preliminarily reserved on the recording medium #2 (502) is left over, the voice memo #2 (622) can be recorded on the recording medium #2 (502).

In the above example, the maximum recordable time of voice memo is 5 minutes, but not limited to 5 minutes, it can be set freely by the user. The capacity of exclusive region for recording voice memo is set by the voice memo recording time, but the rate of voice memo recording region in the entire capacity of the recording medium may be set. Or the capacity to be saved may be set directly in the unit of bytes.

Embodiment 5

This embodiment explains various variations about voice memo recording process.

Voice memo can be recorded in any state of audio and video main information, that is, state during recording, state in which recording is paused, state in which recording does not operate, state during reproduction, state in which reproduction is paused, or state in which reproduction does not operate. Since voice memo can be recorded from a plurality of states, convenience of recording of voice memo is enhanced. Voice memo recording method in these states is explained.

First, voice memo is recorded while recording (imaging) main information.

In the midst of recording (shooting) of main information, when the user presses the voice memo button on the operation unit 130, audio signal entering from the voice memo microphone 110 is supplied into the voice memo processing circuit 111 and converted into data, and recorded as voice memo in the recording medium 150. At this time, this voice memo is related to the frame offset of the clip recorded at the time of pressing the voice memo button. This relation is made by registering or updating management information. In this method, main information and voice memo can be recorded at the same time, and it is not required to record voice memo newly after recording main information.

Or if the clip is changed during voice memo recording, that is, when the vacant capacity for recording main information of the recording medium being recorded at the present becomes zero, and when continuing to record main information in other recording medium, as shown in embodiment 2, the voice memo continues to be recorded on the same recording medium upon start of recording of the voice memo. As a result, if a recording medium other than the recording medium storing the clip related to the voice memo is removed, this voice memo can be reproduced.

Voice memo can be also recorded during pause of recording of main information.

When the voice memo button is pressed during pause of recording of main information, audio signal entering from the voice memo microphone 110 is converted into data, and recorded as voice memo in the recording medium. At this time, this voice memo is related to a frame offset of a clip located at a position at which the recording is paused. In this method, same as in the case of pressing of voice memo button during recording above, it is not required to record voice memo newly after recording main information.

Voice memo can be also recorded while recording of main information does not operate.

When the voice memo button is pressed while recording operation of main information is stopped or does not operate, audio signal entering from the voice memo microphone 110 is converted into data, and recorded as voice memo. At this time, this voice memo is related to the entire shot recorded in the final place. When the shot is divided and recorded into plural clips, the voice memo is related to the entire clip recorded last. Hence, after recording main information (shooting or taking the video), voice memo can be recorded, and during recording, attention can be concentrated on recording of main information (shooting or taking the video).

Meanwhile, when the voice memo button is pressed under suspension of recording of main information, voice memo may be related to a shot to be shot next, and recorded. In this case, a dummy clip is created temporarily, and the voice memo is related to the entire dummy clip. When shooting is later resume, the recorded voice memo is newly related to the clip during shooting, and the dummy clip is deleted. If next shooting is not started, the recorded voice memo is deleted. In this method, since voice memo can be recorded before recording of main information, attention can be concentrated on shooting of video during recording.

The user may be allowed to choose the setting of recording voice memo after recording of main information, or recording voice memo before recording of main information.

Voice memo can be also recorded during reproduction of main information.

When the voice memo button is pressed during reproduction of main information; audio entering from the voice memo microphone 110 is converted into data, and recorded as voice memo in recording medium. At this time, this voice memo is related to the frame offset of the clip during reproduction at the moment of pressing voice memo button. In this method, after recording of main information, voice memo can be related while confirming the video of main information, and it is possible to relate to more accurate position of specified scene.

Voice memo can be also recorded during pause of reproduction of main information.

When the voice memo button is pressed during pause of reproduction of main information, audio entering from the voice memo microphone 110 is converted into data, and recorded as voice memo. At this time, this voice memo is related to a frame offset of a clip located at a position at which reproduction is paused. In this method, same as in the case of pressing voice memo button during reproduction, after recording, voice memo can be related while confirming the main information, and it is possible to relate to more accurate position of specified scene.

Voice memo can be also recorded during stop of main information.

When the voice memo button is pressed during stop after reproduction of main information, if the stop position is in the midst of shot, an audio signal entering from voice memo microphone 110 is converted into data and recorded as voice memo. At this time, this voice memo is related to the entire shot. When the shot is divided and recorded into a plurality of clips, the voice memo is related to the entire clip including the stop position. In this method, during editing operation, voice memo can be recorded in relation to the shot or entire clip, and thus it is easy to search the clip unit, using voice memo as key.

When a clip related to one or more voice memos is deleted, the voice memos related to the clip are also deleted. By this operation, labor of erasing voice memo is saved, and failing of erasing of unnecessary voice memo can be prevented.

When main information and voice memo are recorded at the same time, when recording of main information is terminated, recording of voice memo is also terminated. In this method, labor of finishing voice memo recording can be prevented, and failing of finishing process of voice memo recording due to mistake or the like can be avoided.

In the embodiment, the sampling rate of audio data of main information and voice memo is respectively 48 kHz and 12 kHz, but the values are not particularly limited to them. The bit rate of audio data of main information and voice memo is both 16 bps, but the value is not particularly limited to this. Common sampling rate or common bit rate may be used in audio data of main information and voice memo depending on various reasons such as sufficient allowance in capacity of recording medium, high sound quality required in voice memo, or simple control, and the magnitude of rate are not limited to those mentioned above.

As the format of audio data of main information and voice memo, MXF and WAVE are used respectively, but other format may be used. To simplify the control or the like, a common format may be used for audio data of main information and voice memo.

In the embodiment, the clip is composed of one channel of video data and two channels of audio data, but the number of channels is arbitrary, and, for example, the clip may be composed of one channel of audio data only.

Embodiment 6

This embodiment specifically describes a method of reproducing voice memo.

First, a screen displayed on the display unit 12 for instruction of reproduction of voice memo is explained.

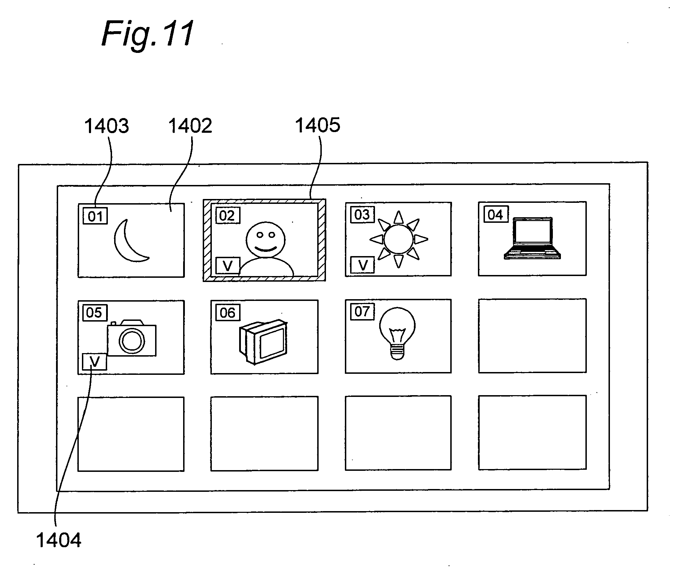

Fig. 11 shows an example of clip list screen displayed on the display unit 121. The clip list screen shows a list of clips recorded in the recording medium 150. If all clips are not displayed on one screen, the screen is scrolled to display by using the select cursor 1102.

On the clip list screen, thumbnails of recorded clips (representative images of clips) 1402 are arrayed and displayed. The thumbnail 1402 may be video data of beginning frame of clip or video data of other frame in the clip. If video data is not available in the clip, that is, in the case of a clip composed of audio data only, the thumbnail 1402 is filled with blue back or similar image. In the thumbnail 1402, not limited to video data in clip, other image may be set by the user.

Together with the thumbnail 1402, the clip number 1403 of the clip is also displayed. The clip number 1403 can be determined regardless of the clip name, and may be set freely as it is unique within the recording medium.

As for the clip to which the voice memo is related, voice memo mark 1404 is displayed. In the example in Fig. 11, voice memo is related to clips in the clip number of "02", "03", and "05".

As for the thumbnail selected by manipulation of the select button 1102, a selection mark 1405 is attached to the outer frame.

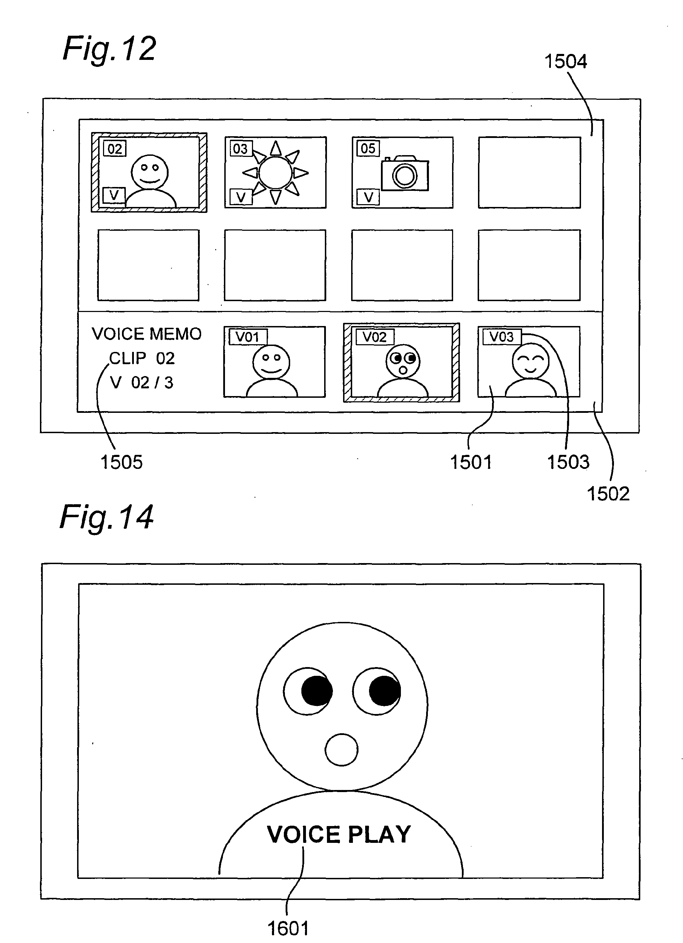

Fig. 12 is a diagram showing an example of voice memo clip list screen. The voice memo clip list screen is obtained from the clip list screen.

The voice memo clip list screen lists and displays only the clips to which voice memo is related to clips recorded in the recording medium. To transfer to voice memo clip list screen, option button or the like on the operation unit 130 is used, and the means for transfer is not limited to this. The voice memo clip list screen includes a voice memo display region 1502 and a clip display region 1504.

The clip display region 1504 is a region for displaying thumbnail of clip (hereinafter referred to as "clip thumbnail") 1402 to which voice memo is related.

The voice memo display region 1502 displays a list of thumbnails 1501 relating to voice memo related to the clip being presently selected (hereinafter referred to as "voice memo thumbnail"). The voice memo thumbnail 1501 is a reduced image of still image of position in the clip to which voice memo is related. If video data is not present in the related clip, that is, in the case of a clip composed of audio data only, the voice memo thumbnail 1501 is filled with blue back or similar image.

The voice memo thumbnail 1501 displays a voice memo number 1503. The voice memo number 1503 can be set regardless of Memo ID 985 described below, and voice memo number 1503 can be set freely as far as it is unique within the clip.

The voice memo display region 1502 also displays voice memo information 1505 indicating information of voice memo being presently selected. For example, it displays the clip number 1403 of relation destination of voice memo being presently selected, and the voice memo number 1503 of the voice memo being presently selected. The example in Fig. 12 shows selection of voice memo in clip number "02" and voice memo number "02" by voice memo information 1505. In this example, it is known that a total of three voice memos are related to the clip in clip number "02".

The voice memo information 1505 may display nothing if not needed, or may display other information if necessary.

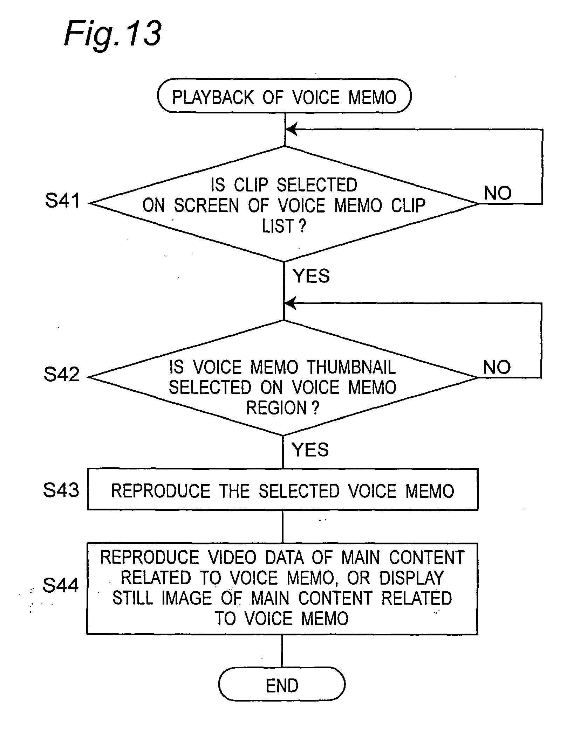

Referring now to Fig. 13, the reproduction operation of voice memo is explained.

The user changes a screen to a voice memo clip list screen in order to reproduce voice memo, and selects and determines a clip to which the voice memo desired to be reproduced is related. The clip desired to be reproduced is selected by the select button 1102 on the operation unit 130, and this selection is determined by pressing the decision button 1103.

On the voice memo clip list screen, it is judgedwhether the clip has been selected and determined by the user's operation (S41). When the clip is selected and determined, the cursor is moved to the voice memo display region 1502, and it is judged whether the voice memo thumbnail desired to be reproduced has been selected or not by the user on the voice memo display region 1502 (S42). When the desired voice memo is selected, by pressing the decision button 1103, the selection is determined, and the selected voice memo is reproduced (S43). At this time, simultaneously with start of reproduction of voice memo, a still image of video data in main content data at the related position of the reproduced voice memo is displayed (S44). Later, when the voice memo data is reproduced to the final end, reproduction of voice memo is terminated, and display of still image of video data of main content data is also stopped.

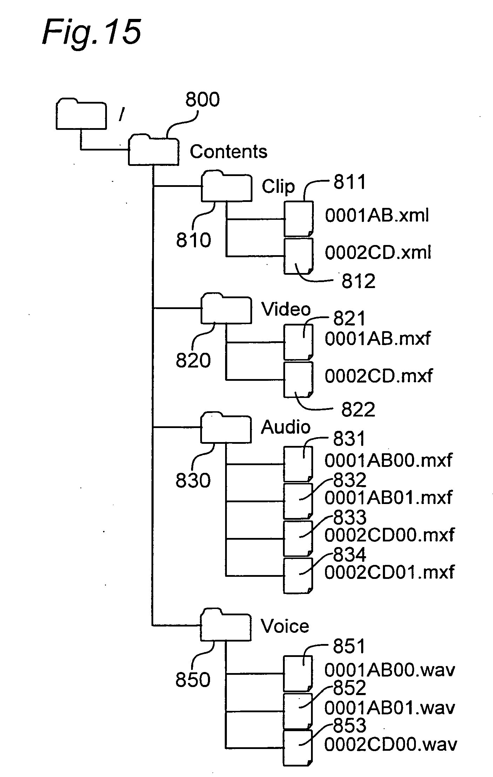

Fig. 14 shows a screen during reproduction of voice memo.

Together with still image of video data of main content data, a display 1601 showing reproduction of voice memo is also indicated. The display 1601 may be also indicated by flickering.

Simultaneously with start of reproduction of voice memo, meanwhile, it may be also designed to start reproduction of moving image of video data of main content data from the related position of reproduced voice memo. At this time, if reproduction of moving image of video data of main content data is terminated before termination of reproduction of voice memo, it may be devised to continue to issue still image of final frame of video data of main content data or blue back image or the like.

When reproduction of voice memo is over, the display automatically returns to voice memo clip list screen. To allow termination in the midst of reproduction of voice memo, it may be also designed to interrupt the reproduction operation of voice memo whenever specified button (for example, the decision button 1103, or stop button (not shown)) is pressed. If main content data play button (not shown) or the select decision button 1103 is pressed during reproduction of voice memo, reproduction of voice memo may be interrupted, and reproduction of audio and video data of main content data may be resumed from the related position of reproduced voice memo.

Embodiment 7

In the embodiment 1, as relating means of frame offset of clip and voice memo data, management tables shown in Fig. 2 and Fig. 3 are used. In this embodiment, information about voice memo relation is described in XML (extensible Markup Language : W3C Recommendation) file. Aside from relating information of clip and voice memo, information about video data and audio data for composing the clip, and various information about clip are also described in XML file.

(Directory structure of recording medium)

Fig. 15 shows an example of directory structure of contents to be recorded in the recording medium 150.

Contents directory 800 is disposed beneath a root directory of the recording medium 150. All files composing a clip are disposed under the Contents directory 800.

Clip directory 810 is disposed beneath the Contents directory 800. An XML file describing clip information is stored under the Clip directory 810.

Video directory 820 is disposed beneath the Contents directory 800. A video data file is stored under the Video directory 820.

Audio directory 830 is disposed beneath the Contents directory 800. An audio data file is stored under the Audio directory 830.

Voice directory 850 is disposed beneath the Contents directory 800. A voice memo data file is stored under the Voice directory 850.

Clip files 811 and 812 are XML files describing all clip information such as voice memo additional information. One clip file is created corresponding to one clip.

Video files 821 and 822 are video data files for composing a clip.

Audio files 831 to 834 are audio data files for composing a clip.

Voice memo files 851 to 853 are voice memo data files related to a clip.

In this example, only necessary elements for explaining the embodiment are mentioned. As required, although not shown, other elements may be incorporated, such as Icon directory and Icon file. The directory structure in the recording medium 150 is not limited to the shown example.

(Definition of clip file by XML)

A specific describing method of clip file using XML is described.

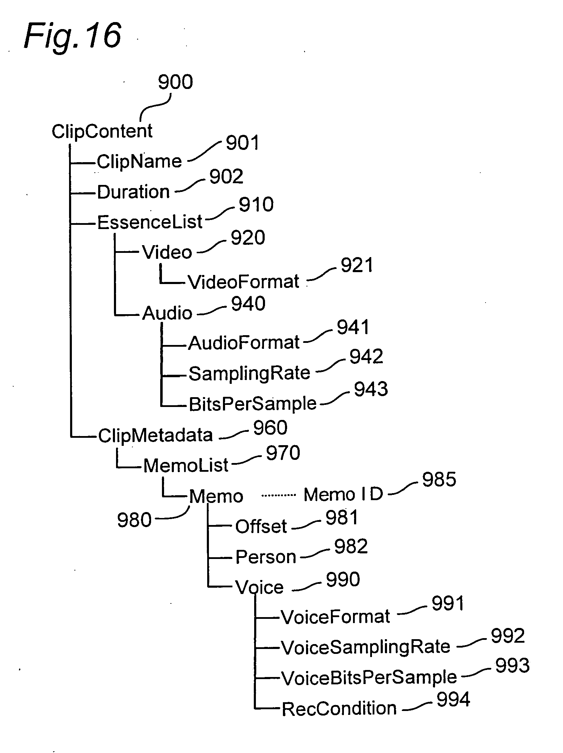

Fig. 16 shows specific items described in XML. Items shown in Fig. 16 are examples listed for explaining the embodiment, and other items not described in Fig. 16 may be also used, or some of the items in Fig. 16 may not be present. Each item may have its attribute.

Clip Content tag 900 has information related to the following clip as element.

Clip Name tag 901 has clip name as element.

Duration tag 902 has number of frames of clip as element.

Essence List tag 910 has essence list of audio and video data as element.

Video tag 920 has the following video data information as element. As attribute of Video tag 920, by addling an attribute of Valid Audio Flag not shown, it may be judged whether or not audio data is multiplexed in video data.

Video Format tag 921 has file format of video data as element. For example, MXF file format may be considered, but other format may be also used.

Audio tag 940 has the following audio data information as element.

Audio Format tag 941 has file format of audio data as element. For example, MXF file format may be considered, but other format may be also used.

Sampling Rate tag 942 has sampling rate of audio data as element. For example, 48000 Hz may be considered, but the value of sampling rate is not specified.

Bits Per Sample tag 943 has bit rate of audio data as element. For example, 16 bps, 24 bps may be considered, but the value of bit rate is not specified.

Clip Metadata tag 960 has information of metadata other than material data related to clip, such as voice memo, as element.

Memo List tag 970 has list of memo relating to clip as element. If memo is not present, the Memo List tag 970 may not be necessary.

Memo tag 980 has the following memo information as element. In the Memo tag 980, Memo ID 985 is added as attribute. Memo ID 985 is a two-digit value independent in each clip, and up to 100 memos can be related to each clip. Memo ID 985 is not limited to two-digit value, and the maximum number of memos to be related to each clip is not limited to 100.

Offset tag 981 has frame offset of clip relating to memo as element. The Offset tag 981 may not be provided if not needed. If the Offset tag 981 is not provided, such memo may be considered to be related to the entire clip.

Person tag 982 has name or the like of the person created the memo as element. For example, when recording voice memo, the name of the recording person is described in the Person tag 982. As a result, the recording person of voice memo is clear, and the recording person may be interviewed if desired to know the situation of recording the voice memo. If not particularly necessary, the Person tag 982 may not be added.

Voice tag 990 has the following voice memo information as element. If voice memo is not related, the Voice tag 990 is not necessary.

Voice Format tag 991 has file format of voice memo data as element. For example, WAVE file format may be considered, but other format may be also used.

Voice Sampling Rate tag 992 has sampling rate of voice memo data as element. For example, 12000 Hz may be considered, but the value of sampling rate may be arbitrary.

Voice Bits Per Sample tag 993 has bit rate of voice memo data as element. For example, 16 bps may be considered, but the value of bit rate may be arbitrary.

Rec Condition tag 994 has recording status of voice memo as element. For example, PLAY status or STILL status may be considered, but other status may be included. The status may be sub-divided. The Rec Condition tag 994 may not be provided if not needed.

Examples of items to be described in clip file are listed above, but as far as the clip and voice memo can be related, the structure, item, element, and attribute may be arbitrary.

(Status management in voice memo recording)

A managing method of recording status of voice memo is described below.

For example, when voice memo is recorded while recording main content data or while reproducing main content data, the Rec Condition tag 994 is set in "PLAY" mode. Or, when voice memo is recorded during pause of recording, stop of recording, pause of reproduction, or stop of reproduction of main content data, that is, when recording voice memo out of synchronization with main content data, the Rec Condition tag 994 is set in "STILL" mode.

When reproducing voice memo, by referring to the Rec Condition tag 994, if "PLAY", from the position related to the voice memo, video data of main content data is reproduced synchronously. On the other hand, if the Rec Condition tag 994 is in "STILL" mode, voice memo is reproduced while continuing to show the still image of the video data of main content data at the position related to the voice memo. Herein, the status of the Rec Condition tag 994 is defined as "PLAY" or "STILL", but other status may be also defined, and, for example, if voice memo is recorded in the midst of search reproduction, the value of search reproduction speed may be described in the Rec Condition tag 994. In such a case, by referring to Rec Condition tag 994, the search reproduction speed is acquired, and voice memo can be reproduced during search reproduction of main content data at the acquired speed.

Incidentally, regardless of the value of the Rec Condition tag 994, voice memo may be reproduced while always continuing to show the still image of the video data of main content data. The relation of the Rec Condition tag 994 and voice memo reproducing method may be freely set by the user. Or, the Rec Condition tag 994 may not be recorded, and in such a case, the voice memo reproducing method may be unified. Regardless of the value of the Rec Condition tag 994, further, the voice memo may be reproduced by a reproducing method instructed by the user.

Thus, by managing the recording status of voice memo, a reproducing means of the voice memo can be increased. When the voice memo is reproduced, only the video data of main content data is reproduced simultaneously from the related position, but audio data of main content data may be also reproduced at the same time.

(Asynchronous recording and asynchronous reproduction of voice memo data)

Generally, when reproducing audio and video data of material, audio and video must be synchronized each other. At this time, even one frame of error is not allowed between audio and video. When video data and audio data are not multiplexed, and video data file and audio data file (including a case of a plurality of channels) are separate files, it is extremely complicated to control reproduction without synchronization of all files. Further when reproducing two or more audio data files different in sampling rate, it is more complicated to control reproduction with synchronization of them.

On the other hand, if not necessary to synchronize audio and video in reproduction, that is, if several frames of errors may be permitted, even if video data file and audio data file are separate files, it is enough to reproduce them independently, thereby resulting in very simple control.

As mentioned above, the voice memo data is merely memo data showing what the material data is, and thus it is not necessary to reproduce in strict synchronization with material data. Therefore, when the voice memo is reproduced out of synchronization with the main content data, the control is much easier.

Since voice memo is related to a specific point on time axis of main content data, by recording the voice memo out of synchronization with the main content data, the voice memo can be recorded for a time longer than duration of the related clip. For example, for a clip of several seconds, voice memo can be recorded for tens of seconds. Voice memo can be recorded in various states of main content data such as during stop, reproduction or trick play (fast search reproduction, reverse reproduction).

For example, when recording voice memo during stop or pause of main content data, as management information of voice memo, the value of the Rec Condition tag 994 is set at "STILL" (the reproducing method of voice memo at this time is described later). At this time, voice memo may be recorded before recording of material. For example, for a scene to be taken from now, the scene briefing may be preliminarily recorded as voice memo, and after shooting the scene, the pre-recorded voice memo can be related to the clip.

When recording voice memo during recording or reproducing of main content data, the value of the Rec Condition tag 994 is set at "PLAY" (the reproducing method of voice memo at this time is described later). At this time, the voice memo to be recorded may not be synchronized with main content data. Hence, as explained in the embodiment 2, when main content data is being or has been recorded in a plurality of recording media, voice memo can be recorded in a single recording medium. In particular, when recording voice memo during reproduction of main content data, even if the end of main content data during voice memo recording passes, recording of voice memo can be continued.

When recording voice memo during trick play of main content data (fast search reproduction, reverse reproduction, etc.), the value of the Rec Condition tag 994 may be set at a proper value representing each status.

When reproducing the voice memo recorded in such manners, the reproducing method may be selected by referring to the Rec Condition tag 994 attached at the time of voice memo recording.

When the value of the Rec Condition tag 994 is "STILL", that is, when the main content data state is stop or pause status when recording the voice memo, the voice memo is reproduced while continuing to present the still image of the video data of main content data at the related position of voice memo.

When the value of the Rec Condition tag 994 is "PLAY", that is, when the main content data state on recording the voice memo is recording or reproducing status , the video data of main content data at the related position of voice memo is reproduced at the same time. As described above, since synchronization is not particularly needed between main content data and voice memo, the both can be reproduced by simpler control. If desired to hear a long voice memo in a short time, only the voice memo can be reproduced at speed of 1.5 or 2 times while reproducing the main content data at normal speed. To the contrary, if the audio message of voice memo is too fast to hear, only the voice memo may be reproduced at speed of 0.5 times during reproduction of the main content data at normal speed.

If the value of the Rec Condition tag 994 shows search reproduction, for example, in the case of search reproduction of speedof 4 times, the voicememo canbe reproducedwhile searching and reproducing the main content data at speed of 4 times from the related position of voice memo. When the value of the Rec Condition tag 994 shows reverse reproduction, the voice memo can be reproduced during reverse reproduction of the main content data from the related position of voice memo.

(Specific example of XML description)

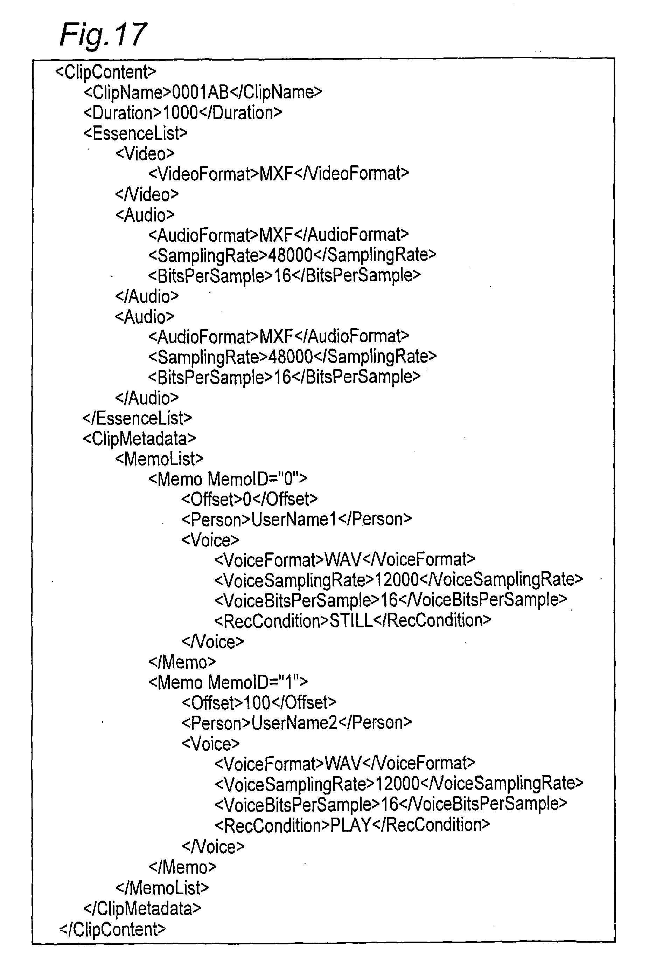

Fig. 17 shows an example of XML description in part of directory structure in Fig. 15. That is, the example shown in Fig. 15 includes the clip file #1 (811) with clip name "0001AB", and the clip file #2 (812) with clip name "0001CD", and Fig. 17 shows XML description about the clip file #1 (811). However, Fig. 17 shows only a part of content described in the clip file #1 (811), and the shown items are necessary items for explaining the embodiment only. Other items may be used, or some of the items shown in Fig. 17 may be omitted. Each item may have its attribute.

The following content is defined in the XML description in Fig. 17.

Clip Name of the clip file #1 (811) is "0001AB".

Duration of the clip file #1 (811) is 1000 frames. MXF is used as file format (Video Format, Audio Format) of video data of main content data and audio data of main content data, and WAVE is used as file format of voice memo (Voice Format). Sampling rate of main content data audio data (Sampling Rate) is 48 kHz, and sampling rate of voice memo data (Voice Sampling Rate) is 12 kHz. Bit rate of audio data and voice memo (Bits Per Sample, Voice Bits Per Sample) is both 16 bps.

The clip file #1 (811) is composed of the video file #1 (821), the audio file #1 (831), the audio file #2 (832), the voice memo file #1 (851), and the voice memo file #2 (852).

The voice memo file #1 (851) is created by a user having "User Name 1" as the user name (Person). This voice memo is recorded in any state (Rec Condition) of stop/pause of recording/ reproducing material, and is related to frame 0 (offset) of the clip.

The voice memo file #2 (852) is created by a user having "User Name 2" as the user name (Person), and this voice memo is recorded in material recording or reproducing state (Rec Condition), and is related to frame 100 (offset) of the clip.

Each data file is name as follows.

File name of the clip file#1 (811) is clip name"0001AB", combined with extension ".xml", that is, "0001AB.xml".

File name of the video file #1 (821) is clip name "0001AB", combined with extension ".mxf", that is, "'0001AB.mxf"

File name of the audio file #1 (831) and the audio file #2 (832) is clipname "0001AB", combined with two-digit channel number "00" and "01", and further extension ".mxf", that is, "0001AB00,mxf" and "0001AB01.mxf ". Channel number of audio data is assigned as channel 0, channel 1, channel 2, and so forth in the list sequence of elements of Audio tag 940 registered in the Essence List tag 910. Channel number of audio data may be determined after adding channel number as attribute of Audio tag 940 shown in Fig. 9 from its value, or channel information may be acquired from other tag, and the means may be arbitrary.

File name of the voice memo file #1 (851) and the voice memo file #2 (852) is clip name "0001AB", combined with two-digit value "00" and "01" of each Memo ID 985, and further extension wav, that is, "'0001AB00.wav" and "0001AB01.wav".

These files are stored in the directory structure as shown in Fig. 16. In this configuration, only by referring to the clip file #1 (811), relating information of material information for composing the clip and voice memo data is known.

The determining method of file names of files is not limited to the above example.

The embodiment has described only the method for relating clip, audio and video data, and voice memo data, and necessary items for explaining its effect, but various items of information may be described in the clip file, including detailed information about material data, information about thumbnails as representative images of clip, imaging place information, imaging person's user information, and imaging device information. As a result, only by referring to the clip file, all information about the clip will be available.

In the embodiment, XML is used as describing language of clip file. Since XML is a language standardized (recommended) by W3C (World Wide Web Consortium), for example, use of conversion software capable of handling XML allows management information to be transferred to other database, or other operations. This seems to provide enhanced versatility. Further, defining a new tag allows management information to be added easily. This seems to provide high extendibility. Since XML is text file, the user can refer to the clip file directly and easily and understand the outline of clip information, with a general information device. The user can also edit the clip file directly with a general information device, and simplified editing is also possible.

Industrial Applicability

The invention is useful for recording and reproducing apparatus for audio and video for efficient editing operation such as nonlinear editing on the basis of recorded media having recorded by memory recordable camera-recorder or the like.

Although the present invention has been described in connection with specified embodiments thereof, many other modifications, corrections and applications are apparent to those skilled in the art. Therefore, the present invention is not limited by the disclosure provided herein but limited only to the scope of the appended claims. The present application relates to subject matters contained in Japanese Patent Application No. 2003-356079 (filed October 16, 2003), the content of which is incorporated herein by reference.

**Claims**

1. A recording and reproducing apparatus for audio and video comprising:

 an AV input section that receives main information for audio and video;
 an audio additional information input section that receives audio additional information which is added to the main information;
 anAV output section that outputs the main information and audio additional information;
 a recording medium that stores the main information and audio additional information;
 a recording and reproducing section that records the main information and audio additional information to the recording medium or reproduces the main information and audio additional information from the recording medium; and
 a controller that controls the operation of the AV input section, audio additional information input section, AV output section, and recording and reproducing section,

 wherein the controller controls the sections so that the audio additional information is recorded to the recording medium, relating the audio additional information to a specific frame position in the main information.

2. The recording and reproducing apparatus for audio and video according to claim 1, wherein the specific frame position in the main information is specified by time code of the main information, and the audio additional information is recorded to the recording medium in relation to the time code of the main information.

3. The recording and reproducing apparatus for audio and video according to claim 1, wherein the specific frame position in the main information is specified by the number of frames from the beginning of the main information, and the audio additional information is recorded to the recording medium in relation to the number of frames from the beginning of the main information.

4. The recording and reproducing apparatus for audio and video according to claim 1, wherein, when the recording medium is composed of a single medium, the audio additional information related to a specific frame position in a clip which is main information recorded consecutively in the single recording medium includes information for the entire clip.

5. The recording and reproducing apparatus for audio and video according to claim 4, wherein the specific frame is a beginning frame in the clip.

6. The recording and reproducing apparatus for audio and video according to claim 1, wherein dummy main information is created in order to add audio additional information to the entire recording medium, the audio additional information is related to the created dummy main information, and the dummy main information and audio additional information are recorded to the recording medium.

7. The recording and reproducing apparatus for audio and video according to claim 1, wherein, when the recording medium is composed of a plurality of recording media and the main information taken in a series of operations is divided and recorded in the plurality of recording media, the audio additional information is related to the divided main information, and the main information and the audio additional information related to the main information are recorded in a same medium.

8. The recording and reproducing apparatus for audio and video according to claim 1, wherein in recording operation of the main information and audio additional information, recording of the audio additional information is terminated when recording of the main information is terminated.

9. The recording and reproducing apparatus for audio and video according to claim 1, wherein the audio additional information is recorded at a different sampling rate or bit rate from audio data of the main information.

10. The recording and reproducing apparatus for audio and video according to claim 1, wherein the audio additional information is recorded in a different file format from audio data of the main information.

11. The recording and reproducing apparatus for audio and video according to claim 1, wherein the recording medium has a reserved region for recording the audio additional information.

12. The recording and reproducing apparatus for audio and video according to claim 1, wherein the audio additional information can be recorded at any time when recording or reproduction of main information is being done, is paused, or does not operate.

13. The recording and reproducing apparatus for audio and video according to claim 12, wherein, when starting the recording of the audio additional information during recording of the main information, the audio additional information is recorded, relating the audio additional information to a frame position of main information which is being recorded upon start of the recording of the audio additional information.

14. The recording and reproducing apparatus for audio and video according to claim 12, wherein when starting the recording of the audio additional information during pause of recording the main information, the audio additional information is recorded, relating the audio additional information to a frame position of main information which is paused upon start of the recording of the audio additional information.

15. The recording and reproducing apparatus for audio and video according to claim 12, wherein when starting the recording of the audio additional information while the recording of the main information does not operate, the audio additional information is recorded, relating the audio additional information to main information which is recorded last.

16. The recording and reproducing apparatus for audio and video according to claim 12, wherein when starting the recording of the audio additional information while the recording of the main information does not operate, the audio additional information is recorded, relating the audio additional information to main information which is to be recorded next.

17. The recording and reproducing apparatus for audio and video according to claim 12, wherein when starting the recording of the audio additional information during reproduction of the main information, the audio additional information is recorded, relating the audio additional information to a frame position of main information which is being reproduced upon start of recording of the audio additional information.

18. The recording and reproducing apparatus for audio and video according to claim 12, wherein when starting the recording of the audio additional information during pause of reproduction of the main information, the audio additional information is recorded relating the audio additional information to a frame position of the main information which is paused.

19. The recording and reproducing apparatus for audio and video according to claim 12, wherein when starting the recording of the audio additional information during reproduction of the main information does not operate, the audio additional information is recorded, relating the audio additional information to the main information which does not operate.

20. The recording and reproducing apparatus for audio and video according to claim 1, wherein when the main information related to the audio additional information is deleted, the audio additional information related to the deleted main information is deleted at the same time.

21. The recording and reproducing apparatus for audio and video according to claim 1, further comprising a display unit that displays a thumbnail image of the main information, wherein, in the case of one or more pieces of audio additional information being related to the same main information, when any one of the one or more pieces of audio additional information is selected, the display unit displays a thumbnail image of main information at a frame position related to the selected audio additional information.

22. The recording and reproducing apparatus for audio and video according to claim 21, wherein upon reproducing the audio additional information, a still image of the main information related to the audio additional information is displayed continuously.

23. The recording and reproducing apparatus for audio and video according to claim 21, wherein upon reproducing the audio additional information, video information of the main information related to the audio additional information is reproduced simultaneously.

24. The recording and reproducing apparatus for audio and video according to claim 21, wherein, when one piece of audio additional information is selected, the main information can be reproduced from frame position of the main information related to the selected audio additional information.

25. The recording and reproducing apparatus for audio and video according to claim 21, wherein, during reproduction of the audio additional information, the main information can be reproduced from a specific frameposition of the main information related to the audio additional information being reproduced.

26. The recording and reproducing apparatus for audio and video according to claim 1, further comprising management information for the audio additional information, wherein the management information includes information indicating state of the main information at starting the recording of the audio additional information.

27. The recording and reproducing apparatus for audio and video according to claim 1, wherein the audio additional information is recorded so that the audio additional information is related to the main information out of synchronization with the time axis of the main information.

28. The recording and reproducing apparatus for audio and video according to claim 1, wherein the audio additional information is reproduced out of synchronization with the time axis of the main information.

29. The recording and reproducing apparatus for audio and video according to claim 1, wherein information specifying the user adding the audio additional information is recorded in a management file.

30. The recording and reproducing apparatus for audio and video according to claim 1, wherein management information of the audio additional information is recorded in XML file.

31. An audio and video recording method comprising:

receiving audio and video main information;
receiving audio additional information added to the main information; and
recording the audio additional information to a recording medium so that the audio additional information is related to a specific frame position in the main information.

32. The audio and video recording method according to claim 31, wherein the specific frame position in the main information is specified by time code of the main information, and the audio additional information is recorded in the recording medium in relation to the time code of the main information.

33. The audio and video recording method according to claim 31, wherein the specific frame position in the main information is specified by the number of frames from the beginning of the main information, and the audio additional information is recorded to the recording medium in relation to the number of frames from the beginning of the main information.

34. The audio and video recording method according to claim 31, wherein, when the recording medium is composed of a single medium, the audio additional information related to a specific frame position in a clip which is main information recorded consecutively in the single recording medium includes information for the entire clip.

35. The audio and video recording method according to claim 34, wherein the specific frame is a beginning frame in the clip.

36. The audio and video recording method according to claim 31, wherein dummy main information is created in order to add audio additional information to the entire recording medium, the audio additional information is related to the created dummy main information, and the dummy main information and audio additional information are recorded to the recording medium.

37. The audio and video recording method according to claim 31, wherein when the recording medium is composed of a plurality of media and the main information taken in a series of operations is divided and recorded in the plurality of recording media, the audio additional information is related to the divided main information, and the main information and the audio additional information related to the main information are recorded in a same medium.

38. The audio and video recording method according to claim 31, wherein in recording operation of the main information and audio additional information, recording of the audio additional information is terminated when recording of the main information is terminated.

39. The audio and video recording method according to claim 31, wherein the audio additional information is recorded at a different sampling rate or bit rate different from audio data of the main information.

40. The audio and video recording method according to claim 31, wherein the audio additional information is recorded in a different file format from audio data of the main information.

41. The audio and video recording method according to claim 31, wherein the recording medium has a reserved region for recording the audio additional information.

42. The audio and video recording method according to claim 31, wherein the audio additional information can be recorded at any time when recording or reproduction of main information is being done, is paused, or does not operate.

43. The audio and video recording method according to claim 42, wherein, when starting the recording of the audio additional information during recording of the main information, the audio additional information is recorded, relating the audio additional information to a frame position of main information which is being recorded upon start of the recording of the audio additional information.

44. The audio and video recording method according to claim 42, wherein when starting the recording of the audio additional information during pause of recording the main information, the audio additional information is recorded,

relating the audio additional information to a frame position of main information which is paused upon start of the recording of the audio additional information.

45. The audio and video recording method according to claim 42, wherein when starting the recording of the audio additional information while the recording of the main information does not operate, the audio additional information is recorded, relating the audio additional information to main information which is recorded last.

46. The audio and video recording method according to claim 42, wherein when starting the recording of the audio additional information while the recording of the main information does not operate, the audio additional information is recorded, relating the audio additional information to main information which is to be recorded next.

47. The audio and video recording method according to claim 42, wherein when starting the recording of the audio additional information during reproduction of the main information, the audio additional information is recorded, relating the audio additional information to a frame position of main information which is being reproduced upon start of recording of the audio additional information.

48. The audio and video recording method according to claim 42, wherein when starting the recording of the audio additional information during pause of reproduction of the main information, the audio additional information is recorded relating the audio additional information to a frame position of the main information which is paused.

49. The audio and video recording method according to claim 42, wherein when starting the recording of the audio additional information during reproduction of the main information does not operate, the audio additional information is recorded, relating the audio additional information to the main information which does not operate.

50. The audio and video recording method according to claim 31, wherein when the main information related to the audio additional information is deleted, the audio additional information related to the deleted main information is deleted at the same time.

51. The audio and video recording method according to claim 31, further comprising recording information indicating state of the main information at starting the recording of the audio additional information.

52. The audio and video recording method according to claim 31, wherein the audio additional information is recorded so that the audio additional information is related to the main information out of synchronization with the time axis of the main information.

53. The audio and video recording method according to claim 31, wherein information specifying the user adding the audio additional information is recorded in a management file.

54. The audio and video recording method according to claim 31, wherein management information of the audio additional information is recorded in XML file.

55. A reproducing method of reproduction from a recording medium to which main information and audio additional information are recorded in the audio and video recording method according to claim 31, the audio and video reproducing method comprising:

displaying a thumbnail image of main information;
one or more pieces of audio additional information being related to the same main information; and
when one of the one or more pieces of audio additional information is selected, displaying a thumbnail image of main information at a frame position related to the selected audio additional information.

56. The audio and video reproducing method according to claim 55, wherein upon reproducing the audio additional information, a still image of main information related to the audio additional information is displayed continuously.

57. The audio and video reproducing method according to claim 55, wherein upon reproducing the audio additional information, video information of the main information related to the audio additional information is reproduced simultaneously.

58. The audio and video reproducing method according to claim 55, wherein when one piece of audio additional information is selected, the main information can be reproduced from frame position of the main information related to the selected audio additional information.

**59.** The audio and video reproducing method according to claim 55, wherein during reproduction of the audio additional information, the main information can be reproduced from a specific frame position of the main information related to the audio additional information being reproduced.

**60.** A reproducing method of reproduction from a recording medium to which main information and audio additional information are recorded by the audio and video recording method according to claim 31, comprising reproducing the audio additional information out of synchronization with the time axis of the main information.

## Fig.1

## Fig.2

## Fig.3

| CLIP NAME | FRAME OFFSET | MEMO ID | VOICE MEMO FILE NAME |
|-----------|--------------|---------|----------------------|
| 0001AB | 0 | 00 | 0001AB00.wav |
| 0001AB | 100 | 01 | 0001AB01.wav |
| 0002CD | 150 | 00 | 0002CD00.wav |

200     201     202     203

20

## Fig.4

| CLIP NAME | AV TYPE | CHANNEL NO. | MATERIAL FILE NAME |
|-----------|---------|-------------|--------------------|
| 0001AB | V | - | 0001AB.mxf |
| 0001AB | A | 0 | 0001AB00.mxf |
| 0001AB | A | 1 | 0001AB01.mxf |
| 0002CD | V | - | 0002CD.mxf |
| 0002CD | A | 0 | 0002CD00.mxf |
| 0002CD | A | 1 | 0002CD01.mxf |

200     301     302     303

30

# Fig.5

START

S11 | REFERRING TO VOICE MEMO MANAGEMENT TABLE, ACQUIRE CLIP ID, FRAME OFFSET, ETC BASED ON FILE NAME OF VOICE MEMO THAT IS BEING REPRODUCED

S12 | REFERRING TO CLIP MANAGEMENT TABLE, ACQUIRE ALL FILE NAMES OF RELATED MATERIALS BASED ON THE ACQUIRED CLIP NAMES

S13 | REPRODUCE FILE WITH THE ACQUIRED FILE NAME FROM POSITION POINTED BY THE ACQUIRED OFFSET

END

# Fig.6

```
        ┌─────────────────┐
        (      START      )
        └─────────────────┘
                 │
    ┌────────────────────────────────────┐
    │   REFERRING TO CLIP MANAGEMENT TABLE, │
S21 │  ACQUIRE CLIP NAME OF CLIP THAT IS BEING │
    │            REPRODUCED              │
    └────────────────────────────────────┘
                 │
    ┌────────────────────────────────────┐
    │ REFERRING TO VOICE MEMO MANAGEMENT TABLE, │
S22 │   ACQUIRE MEMO ID AND VOICE FILE NAME │
    │   RELATED TO THE ACQUIRED CLIP NAME │
    └────────────────────────────────────┘
                 │
    ┌────────────────────────────────────┐
    │  REPRODUCE VOICE MEMO WITH THE ACQUIRED │
S23 │            VOICE FILE NAME          │
    └────────────────────────────────────┘
                 │
        ┌─────────────────┐
        (       END       )
        └─────────────────┘
```

## Fig.7

AV INPUT SECTION —100

VOICE MEMO MIC —110

COMPRESSION AND EXPANSION CIRCUIT —101

VOICE MEMO PROCESSING CIRCUIT —111

AV OUTPUT SECTION —102

RECORDING AND REPRODUCING SECTION —140

RECORDING MEDIUM #1 —501

RECORDING MEDIUM #2 —502

RECORDING MEDIUM #3 —503

150

CONTROLLER —120

OPERATION UNIT —130

DISPLAY UNIT —121

## Fig.8

| RECORDING MEDIUM #1 501 | RECORDING MEDIUM #2 502 | RECORDING MEDIUM #3 503 |
|---|---|---|

SHOT — 600

| CLIP #1 611 | CLIP #2 612 | CLIP #3 613 |
|---|---|---|

CLIP

VOICE MEMO

VOICE MEMO #1 — 621

VOICE MEMO #2 — 622

VOICE MEMO #3 — 623

*Fig.9*

1102

1101

1103

130

# Fig.10

```
                    ( RECORD OF VOICE MEMO )
                                |
          ┌─────────────────────────────────────────────┐
    S31   │    DETERMINE AND STORE CLIP NAME,            │
          │  FRAME OFFSET, ETC WHICH ARE RELATED         │
          │           TO VOICE MEMO                       │
          └─────────────────────────────────────────────┘
                                |
          ┌─────────────────────────────────────────────┐
    S32   │     REFERRING TO MANAGEMENT TABLE,           │
          │  DETERMINE AND STORE UNIQUE MEMO ID          │
          │           AND FILE NAME                       │
          └─────────────────────────────────────────────┘
                                |
          ┌─────────────────────────────────────────────┐
    S33   │           RECORD VOICE MEMO                   │
          └─────────────────────────────────────────────┘
                                |
    S34        <  IS OPERATION TO STOP RECORDING MADE ? >──── NO
                                |
                               YES
                                |
          ┌─────────────────────────────────────────────┐
    S35   │       STOP VOICE MEMO RECORDING              │
          └─────────────────────────────────────────────┘
                                |
          ┌─────────────────────────────────────────────┐
    S36   │  RECORD RELATING INFORMATION OF VOICE         │
          │     MEMO TO MANAGEMENT TABLE                  │
          └─────────────────────────────────────────────┘
                                |
                          (  END  )
```

*Fig.11*

## Fig.12

1504

VOICE MEMO
CLIP 02
V 02 / 3

1505

1501    1503

1502

## Fig.14

VOICE PLAY

1601

# Fig.13

```
        ( PLAYBACK OF VOICE MEMO )
                    │
                    ▼◄───────────────────┐
                                         │
S41      IS CLIP SELECTED          NO    │
      ON SCREEN OF VOICE MEMO CLIP ──────┘
              LIST ?
                    │
                   YES
                    ▼◄───────────────────┐
                                         │
S42   IS VOICE MEMO THUMBNAIL      NO     │
       SELECTED ON VOICE MEMO ───────────┘
               REGION ?
                    │
                   YES
                    │
S43   REPRODUCE THE SELECTED VOICE MEMO
                    │
       REPRODUCE VIDEO DATA OF MAIN CONTENT
S44     RELATED TO VOICE MEMO, OR DISPLAY
        STILL IMAGE OF MAIN CONTENT RELATED
                TO VOICE MEMO
                    │
                ( END )
```

# Fig.15

800

/

Contents

Clip ⌐811
810
  0001AB.xml
  0002CD.xml
  ⌐812

Video ⌐821
820
  0001AB.mxf
  0002CD.mxf
  ⌐822

Audio ⌐831
830
  0001AB00.mxf
  ⌐832
  0001AB01.mxf
  ⌐833
  0002CD00.mxf
  ⌐834
  0002CD01.mxf

Voice
850
  ⌐851
  0001AB00.wav
  ⌐852
  0001AB01.wav
  ⌐853
  0002CD00.wav

*Fig.16*

900

ClipContent
├─ClipName ⟋901
├─Duration ⟋902
├─EssenceList⟋910
│   ├─Video ⟋920
│   │   └─VideoFormat ⟋921
│   └─Audio ⟋940
│       ├─AudioFormat⟋941
│       ├─SamplingRate ⟋942
│       └─BitsPerSample⟋943
└─ClipMetadata ⟋960
    └─MemoList⟋970
        └─Memo ········ Memo I D ⟋985
        980⟋  ├─Offset ⟋981
               ├─Person ⟋982
               └─Voice ⟋990
                   ├─VoiceFormat ⟋991
                   ├─VoiceSamplingRate ⟋992
                   ├─VoiceBitsPerSample ⟋993
                   └─RecCondition ⟋994

## Fig.17

```
<ClipContent>
    <ClipName>0001AB</ClipName>
    <Duration>1000</Duration>
    <EssenceList>
        <Video>
            <VideoFormat>MXF</VideoFormat>
        </Video>
        <Audio>
            <AudioFormat>MXF</AudioFormat>
            <SamplingRate>48000</SamplingRate>
            <BitsPerSample>16</BitsPerSample>
        </Audio>
        <Audio>
            <AudioFormat>MXF</AudioFormat>
            <SamplingRate>48000</SamplingRate>
            <BitsPerSample>16</BitsPerSample>
        </Audio>
    </EssenceList>
    <ClipMetadata>
        <MemoList>
            <Memo MemoID="0">
                <Offset>0</Offset>
                <Person>UserName1</Person>
                <Voice>
                    <VoiceFormat>WAV</VoiceFormat>
                    <VoiceSamplingRate>12000</VoiceSamplingRate>
                    <VoiceBitsPerSample>16</VoiceBitsPerSample>
                    <RecCondition>STILL</RecCondition>
                </Voice>
            </Memo>
            <Memo MemoID="1">
                <Offset>100</Offset>
                <Person>UserName2</Person>
                <Voice>
                    <VoiceFormat>WAV</VoiceFormat>
                    <VoiceSamplingRate>12000</VoiceSamplingRate>
                    <VoiceBitsPerSample>16</VoiceBitsPerSample>
                    <RecCondition>PLAY</RecCondition>
                </Voice>
            </Memo>
        </MemoList>
    </ClipMetadata>
</ClipContent>
```

## INTERNATIONAL SEARCH REPORT

| International application No. |
| --- |
| PCT/JP2004/009489 |

A. CLASSIFICATION OF SUBJECT MATTER
Int.Cl[7] H04N5/91

According to International Patent Classification (IPC) or to both national classification and IPC

B. FIELDS SEARCHED

Minimum documentation searched (classification system followed by classification symbols)
Int.Cl[7] H04N5/76-5/956, G11B20/10-20/12

Documentation searched other than minimum documentation to the extent that such documents are included in the fields searched

| Jitsuyo Shinan Koho | 1922-1996 | Toroku Jitsuyo Shinan Koho | 1994-2004 |
| Kokai Jitsuyo Shinan Koho | 1971-2004 | Jitsuyo Shinan Toroku Koho | 1996-2004 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| A | JP 2001-136482 A (Matsushita Electric Industrial Co., Ltd.), 18 May, 2001 (18.05.01), Full text; all drawings (Family: none) | 1-60 |
| A | JP 2003-158697 A (Fuji Photo Film Co., Ltd.), 30 May, 2003 (30.05.03), Full text; all drawings (Family: none) | 1-60 |
| A | JP 2001-285780 A (Pioneer Electronic Corp.), 12 October, 2001 (12.10.01), Full text; all drawings (Family: none) | 1-60 |

☐ Further documents are listed in the continuation of Box C.   ☐ See patent family annex.

| * Special categories of cited documents: | |
| --- | --- |
| "A" document defining the general state of the art which is not considered to be of particular relevance | "T" later document published after the international filing date or priority date and not in conflict with the application but cited to understand the principle or theory underlying the invention |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 28 September, 2004 (28.09.04) | 12 October, 2004 (12.10.04) |

| Name and mailing address of the ISA/ | Authorized officer |
| --- | --- |
| Japanese Patent Office | |
| Facsimile No. | Telephone No. |

Form PCT/ISA/210 (second sheet) (January 2004)